# EUROPEAN PATENT SPECIFICATION

(11) **EP 0 254 544 B1**
(45) Date of publication and mention of the grant of the patent: **28.06.1995**
(21) Application number: 87306462.0
(22) Date of filing: 21.07.1987
(51) Int. Cl.: G03B 17/42

(54) **Add-on/detachable motor winder for a manually operable camera**
Lösbarer Motorantrieb für ein handbetätigbare Kamera
Dispositif amovible à entraînement par moteur pour une caméra à commande manuelle

(30) Priority: 21.07.1986 GB 8617734
(43) Date of publication of application: 27.01.1988
(73) Proprietor: Liew, Chewa War, Kuala Lumpur (MY)
(72) Inventor: Liew, Chewa War, Kuala Lumpur (MY)
(74) Representative: Crawford, Andrew Birkby

(56) References cited:
- DE-A- 2 757 777
- DE-A- 2 812 599
- DE-A- 2 941 120
- DE-A- 3 135 750
- DE-B- 1 235 731
- DE-B- 2 839 648
- GB-A- 2 004 658
- US-A- 4 657 365
- "Les Compléments Practiques", pp 1, 2, 20, 28, ROLLEI, March 1963, Braunschweig, Germany

## Description

This invention relates of an add-on/detachable motor winder for a manually operable camera, and more particularly but not exclusively to a winder for a manually operable 6 x 6 medium format camera such as the Hasselblad 500c and 500c/m type.

Camera motor winder and drives were well-known only in the early part of 1960's, after which most professional and amateur 35mm miniature and only some medium format 6 x 6cm cameras were designed with provision for motor winder or drive couple ability to the camera. But cameras designed in the 1950's were basically manually operated. Motor drive or winders were kind of novel and not practiced and especially in the area of the 6 x 6cm medium format cameras like the Hasselblad 500c and 500 c/m design then had no provision for motor winder/drive couplability. These said cameras have since remained unchanged till present.

Camera film winding and shutter release mechanism for 35mm cameras is disclosed in GB-A-2004658. In a motor drive for a camera, a single reversible motor performs both the shutter release and the film winding operations of the camera.

In operation, firstly motor 8 operates a shutter release lever 3 via a ratchet 10, 11 and a gear 12. As the trailing shutter blind moves, it operates a switch 106 to reverse the motor 8. The motor then winds on the film shaft 102 via gears 16, 17 and recocks the shutter. Completion of film wind is detected at 105 and the switch 106 is operated to halt the motor.

The above-said professional Hasselblad 500c, 500c/m cameras were full-manual types ie. manual film advance, mirror and shutter tensioning etc. The camera manufacturer, Victor Hasselblad AB does not or have not been able to supply a suitable, practical "add-on" type motor winder for the said cameras. However, motorised operation has been introduced into the camera range by yet another different model: 500EL, 500EL/M or the latest 500ELX which are based on the "manual only" 500 c/m model, but with a motorised compartment box (die: 112mm depth x 90 mm width x 47mm height approx.) integrated at the base as a full whole unit.

And these motorised camera type have not been completely satisfactory because of their overall size and bulk making holding and handling them a little clumsy. They are especially awkward in some combinations, eg. with electronic flash attachments. Another drawback is that there is no manual over-ride back-up in manual operation, like advancing the film cocking the shutter in battery failure conditions; also the batteries used are "odd" battery sizes and very expensive, and even worse, not easily available. These batteries are the Nicad rechargeable - slow charging types and therefore not quite versatile in recharging.

The motorized 500E/ELM cameras were also very expensive, about twice the price of the 500 c/m camera body for camera body.

A major drawback is that it does not in anyway act as an upgrade of the manual 500c/m for motorised operation.

Moreover these different camera model types of "motorised-only" and "manual-only" respectively did not meet their acclaimed "total component interchangeability concept" of a professional camera system.

Since October 1985, a US independent maker's motor winder model, the Prowinder 500 (which is the subject of US patent 4,657,365, published 14 April 1987), has been able to meet the "add-on" requirement for the Hasselblad 500 c/m manual cameras, to wind the film advance operation by motor, but the motor winder is still quite unsatisfactory. The Prowinder 500 is an almost exact copy of the Mamiya 645 power winder, but adapted for use of the Hasselblad 500 c/m and copied so well that it similarly did not have an accessory show for electronic flash units, which is a desirable feature.

The Prowinder 500's overall configuration is a rigid L-shaped winder, consisting of a handle part locating the coupling connections to the camera winding train and a large rectangular base compartment to be locked to camera's tripod socket from the bottom, which is not quite functionally ideal. The size of 30mm height x 150mm width x 80mm depth approx. of the said base compartment holds the 6'AA' batteries, electric micro-motor, reduction gear system and especially the 30mm height/thickness of the base compartment undoubtedly inconvenienced the focusing of the lenses, (7 often-used lenses have helicord focusing rings that are close to the camera body and the said compartment) and it is particularly the base portion of the fixed mechanical release triggering L-arm of the winder from the base compartment that triggers the camera shutter release button that cause obstruction and unpleasant operation.

The weight of the said winder base compartment added more weight to the 500c/m camera's centre of gravity (C.G.) when held in use by the handle part of the said winder thus contributing more moments at the pivot at the handle.

The indirect nature of gearing and coupling to the Hasselblad 500c/m camera makes the winder configuration (set-up) undesirably complicated and if not quite inefficient and unaesthetical. Moreover, it had no other provisions to work the other useful features of the 500c/m cameras other than the basic functions.

A further device known as the "ROLLEIMOT" remote controlled shutter release device is disclosed in "Les Complements Pratiques", page 20, published by "Rollei", Braunschweig, Germany in March 1963. This device, said to be suitable for the camera models "Rolleiflex 6x6" and "Rolleimagic" allows the shutter release action and winding-on action of such cameras to be controlled by a switch connected to the device by a cable. The winding-on action is achieved by way of the manual winding-on crank of the camera being turned by the motor in the device, to which it is coupled. The camera is supported in relation to the device by a base, to which the base of the camera is bolted. The surface of the camera on which the winding mechanism is situated is not physically connected to the device other than by the winding-on crank. The weight of the camera may be stably supported if the base is stably supported, but may not be stably supported merely by holding the device.

According to the present invention there is provided an electronic motor winder for use with a camera, the camera having a manually-operable winding mechanism provided on a first surface thereof and a shutter release mechanism, comprising:
a generally rectangular body adapted to be detachably mounted on the camera;
a drive assembly contained in the body and including an electric motor, for enabling the winding of film; said drive assembly being adapted to be coupled to the camera winding mechanism;
a mechanically or electromechanically operable actuator arranged to operate the camera manual shutter release mechanism;
a manually operable control button for operating the drive assembly and the actuator;
a battery compartment for receiving batteries to energise the motor;
electronic circuitry for controlling the operation of the winder in response to operation of the control button; wherein the winder is adapted for use with a medium format generally cuboid camera; characterised in that an attachment surface of the body is adapted to be mounted directly to said first surface of the camera in such a way that said attachment surface is adjacent to and opposes a substantial portion of said first surface of the camera; and
further characterised in that the attachment surface is provided with interengagement means arranged to interengage the interengagement means on the first surface of the camera, whereby the camera is stably supported by, and in relation to, the winder when said winders is in use.

When the winder is attached to the camera a smooth integrated unit of camera and winder assembly is advantageously achieved which is more effective, practical and versitile having a relatively much better balance and handling (better ergonomics/aesthetics) that do not contribute to the moments of the camera centre of gravity when held by the handle of the winder in use, by virtue of the general shape of the winder and its attachment to camera body.

Preferably, the mechanically or electromechanically operable acutator is an "L" arm which extends from the winder body and is arranged to operate the camera shutter release button on operation of levers or a solenoid. The length of the "L" arm is preferably adjustable or the "L" arm is interchangeable for "L" arms of different length. The "L" arm is preferably mounted on the side of the winder body which is flush with the camera.

The adjustability and or interchangeability of the triggering mechanical "L" arm is for triggering of the standard position of the camera shutter release button or for a modified camera body and a modified improved shutter release button, with the mechanical triggering "L" arm being located at the near side of camera body shutter release to the winder, or may be at the underside of camera near the shutter release button.

Preferably said drive assembly comprises an electric motor reductior gearing and an adaptor, the adaptor being arranged to lockably engage with the camera winding mechanism in order to enable film to be wound on and to attach the side of the body to the camera surface.

A specific embodiment of the invention will now be described by way of example with reference to the accompanying drawings in which:
Figure 1 shows in perspective view the anatomical I-shaped winder in attachment with the camera to form a smooth integrated unit,
Figure 2 shows a plan view of the adjustable and/or interchangeable mechanical trigger "L" arm of the winder in position relative to the camera shutter release button. including the overall camera with lens and winder in attachment,
Figure 3 shows winder/camera in front view and the optional base plate for extra sturdy mounting;

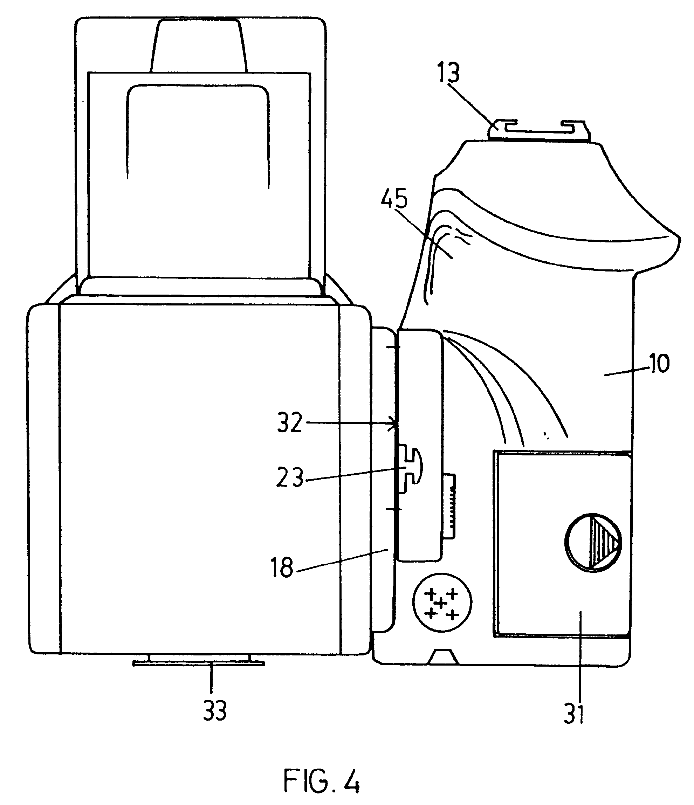

Figure 4 shows winder/camera in rear position;
Figure 5 shows the side view from the winder mounted to the camera and the position of the winder trigger "L" arm in position with the shutter button of camera;
Figure 6 shows the camera body with the optional modified slot at the shutter release position;
Figure 7 shows the component parts of the modified shutter release configuration,
Figure 8 illustrates the sectional view of Figure 7;
Figure 9 illustrates the adjusted winder mechanical trigger "L" arm in position with the modified shutter release button for camera in a top view section, with a protrusion of about 3 mm from the camera body, and with solenoid;
Figure 10 illustrates Figure 9, the shutter button in the triggered position held down by the adjusted "L" arm with the solenoid in closed position 30a;
Figure 11 shows the scaled-up top section view of the parts of the winder assembly of micro-motor, ball-bearing design incorporated in the large gear 24, reduction gearing, mounting, coupling and attachment,
Figure 12 shows another variation of the ball-bearing design incorporated in the large gear 24, (to reduce load friction);
Figure 13 shows the position of the assembly of motor, reduction gearing and the hook-up to the camera strap-lug;
Figure 14 shows the winder at the attachment side and the trigger "L" arm at the standard position of the normal camera shutter release button, emphasising on the bayonet lock-up plate of the winder, a screw button or similar means to lock the winder about the camera strap-lug, and the other adjustable trigger "L" arm for the camera's pre-release function lever;
Figure 15 illustrates the same as Figure 14 but with a different body configuration, the index for mounting or detaching and also illustrates the adjustability of the trigger "L" arm for the longer pre-release lever of the newer version of cameras;
Figure 16 shows a perspective view of another version in design of the I-shaped winder attached to the camera with the modified shutter button and the adjusted position of the mechanical trigger "L" arm of winder closer to the camera body for smoother focusing of the lenses;
Figure 17 shows the front view of Figure 16 with a version of a fixed L-shaped configuration with thin base.10a;
Figure 18 shows a rear view of winder/camera of Figure 16;
Figure 19 shows the side profile of Figure 16, and
Figure 20 shows the plan view of the winder of Figure 16.

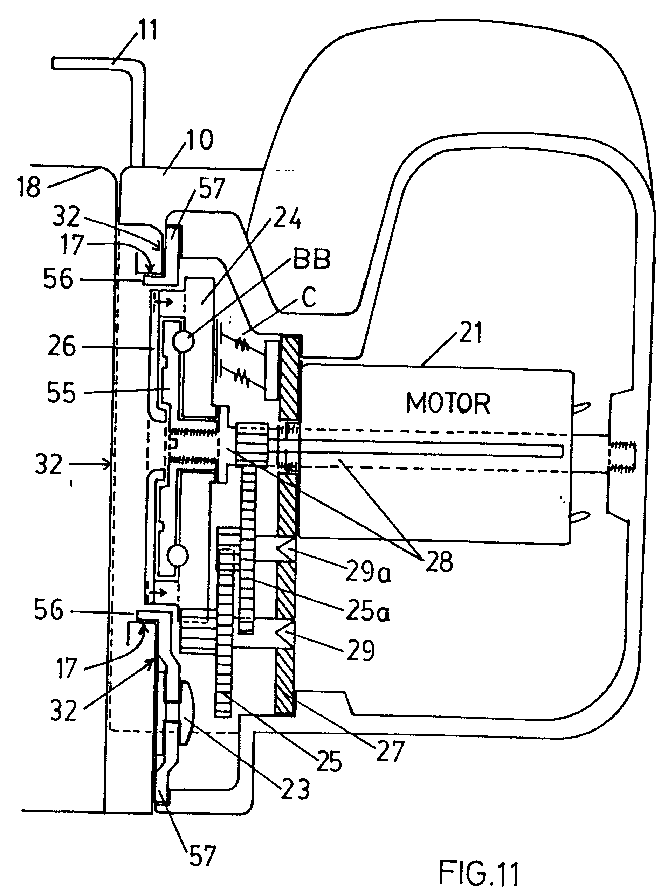

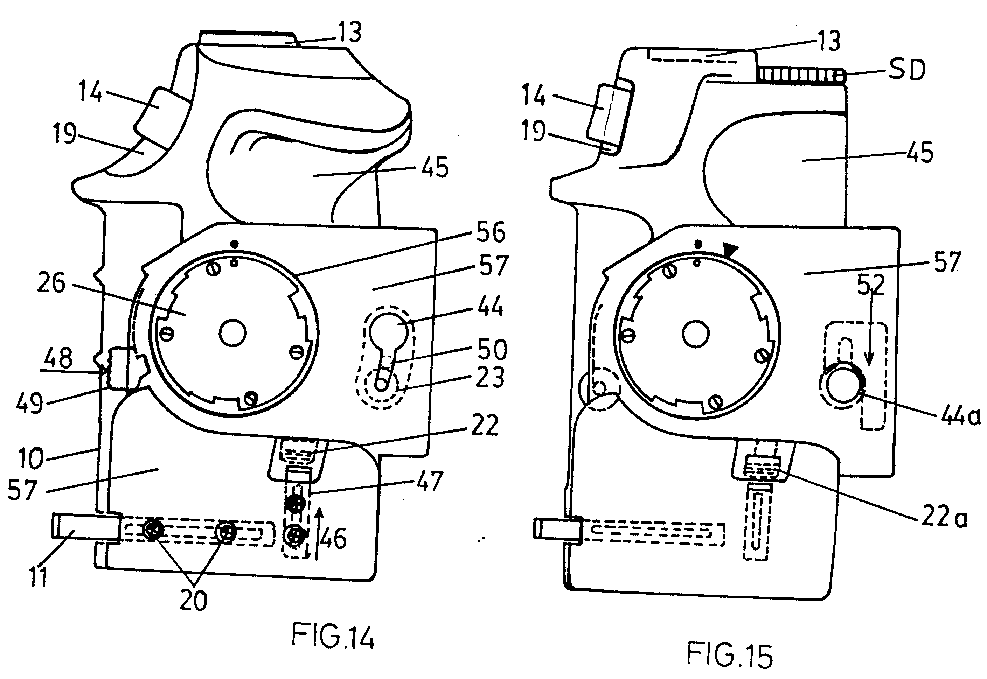

Referring to the drawings, the winder chassis/winder 10 is of a one-piece thick I-shaped anatomically designed handle to fit the right hand for a right hand hold, is made of strong, lightweight aluminium die-cast, strong plastic or similar materials. It attaches to the camera winding train 3-claw bayonet 36 (like the standard interchangeable winding knob or the rapid winding crank which are available accessories) via the compatible adaptor bayonet plate 26, simultaneously engaging the raised circular ring 56 on the winder plate 57 (refer Fig 11, 14) into the camera body opening 17 for the winding train, in a very snug fit, thus ensuring good centering of the drive transmission from the winder to camera, providing good lateral support from winder to the camera and assisting positively in the good attachment, also Simultaneously locking the contoured figure hole 44 of the winder plate 57 to the camera strap-lug 23 in an approximate 20 degree turn clockwise. The keyhole recess 44 could be exchanged for other means which would securely hold the lug such as a hook arrangement, for example, and the lug could be any projection on the surface of the camera, not necessarily the camera strap-lug.

A means is used to secure the winder in place to the camera 18 at 32 about the strap-lug 23 e.g a screw button 50 is screwed in a position to prevent the strap-lug 23 from moving out of its determined position (Figure 14). The reverse screwing out of the screw button 50 will allow the winder to be detached from the camera while holding lever 49 in the direction of the arrow 48 engaging into the large gear 24 both during attaching and detaching procedures with the index aligned.

Another variation is shown in Figure 15, the locking of the key plate in the direction of arrow 52 to engage into the strap-lug 23 at the opening 44a of the winder plate 57. The winder has its own strap-lug 23a.

The winder body holds the direct, simple effective drive of an assembly of electric micro-motor 21 and its reduction gearing of pinion, gear and pinion 25 and 25a and the last stage large diameter gear 24 and adaptor bayonet plate 26 via plate 27 whereon the said drive components are assembled. As illustrated in Figure 11, the gear and pinion 25a is first mounted on the plate 27 at 29a then followed by gear/pinion 25 at 29. The motor and pinion 21 is next bolted onto the said plate 27 and bolted onto the winder chassis 10. Shaft 28 is bolted through at plate 27 to the other end of chassis 10 (achieving strong support characteristics) after which the large gear 24 is placed in position on shaft 28, with an arrangement of ball-bearings BB retained and securedly screwed on by plate 55, allowing for free rotation, thus reducing load friction while supporting the camera assembly and weight through bayonet plate 26 attached on gear 24.

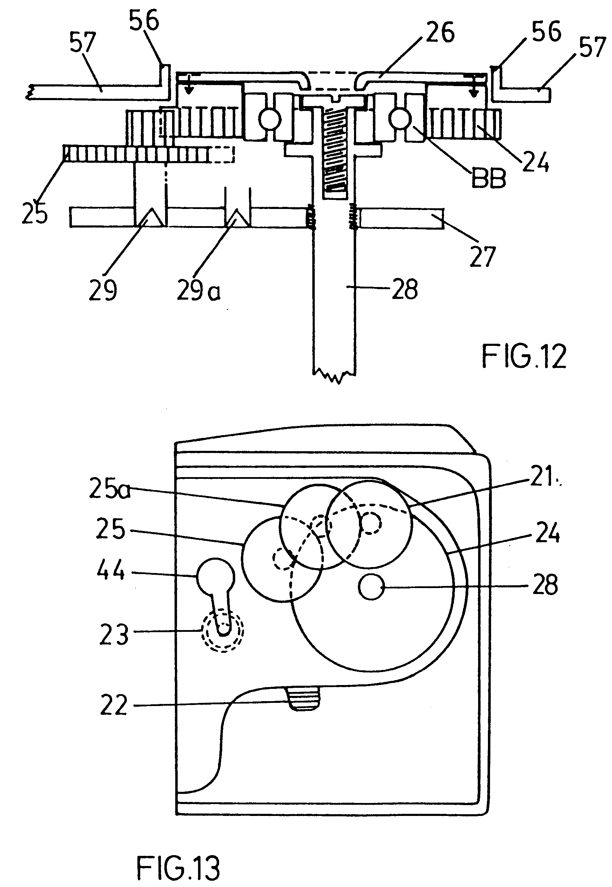

An alternative method of mounting the large gear 24 on the shaft 28 is illustrated in Figure 12. In this arrangement there is no plate 55 securing the large gear 24 via ball bearings. Instead the large gear 24 is mounted and retained on the shaft 28 by means of a ball bearing and separate hub arrangement as illustrated in Fig.12.

On the other face of the large gear 24 is provided a means of a cam-lever electric break-off circuit C after said gear 24 have completed a full cycle, coinciding with the camera winding cycle. The components of the gearing system as said above and illustrated in Figure 11,12 and 13 show the direct simplicity high efficiency effectiveness of the configuration of straight spur gears to achieve the object.

Variations of the drive arrangement may be employed e.g the inclusion of a further reduction gearing step and different placement of the drive.

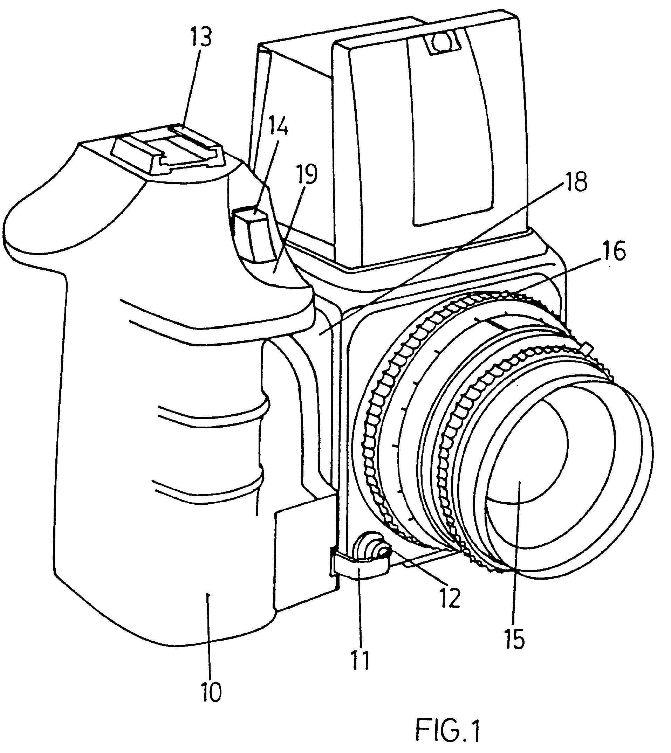

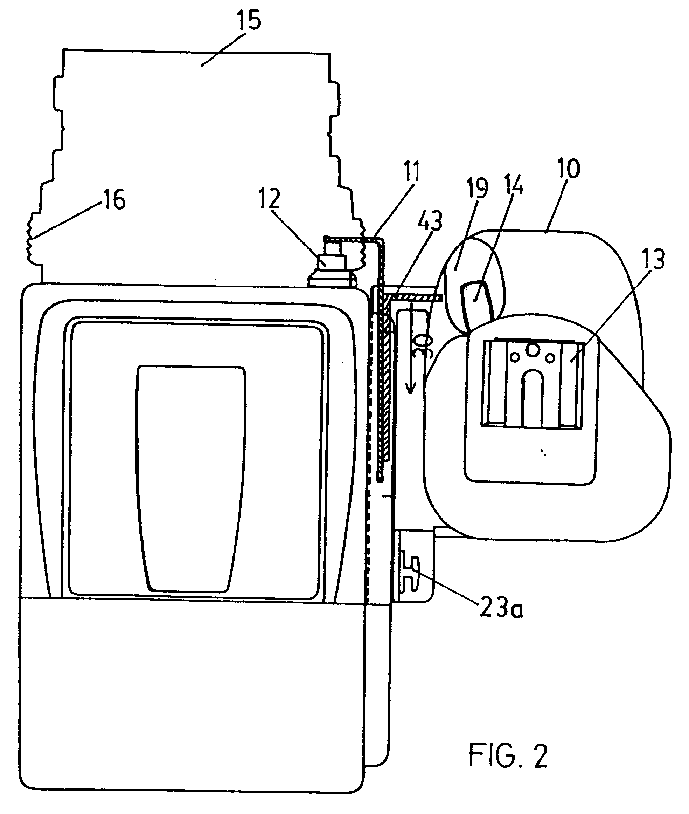

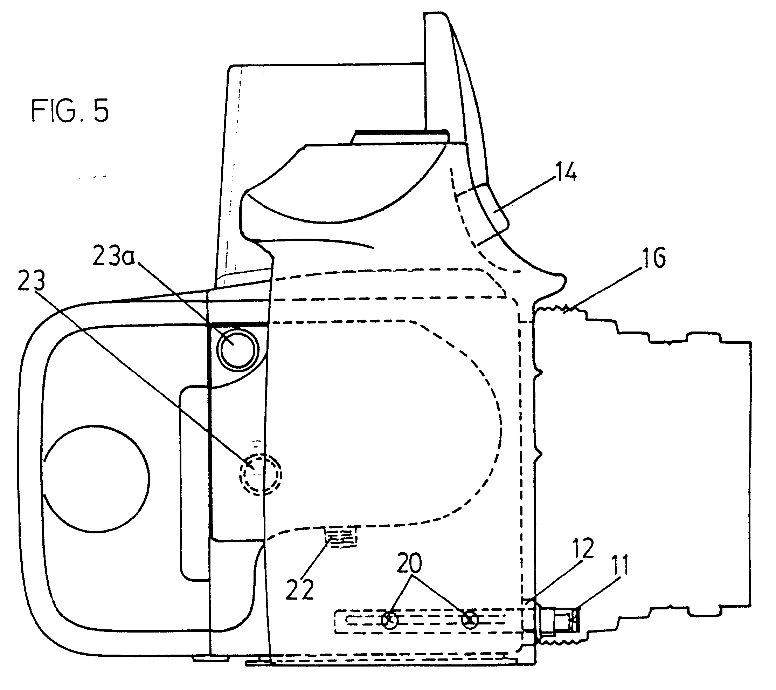

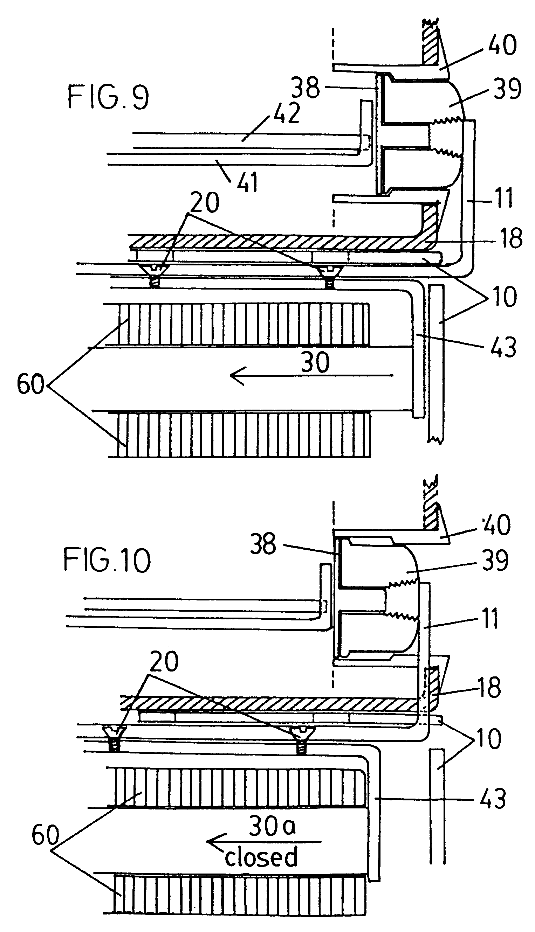

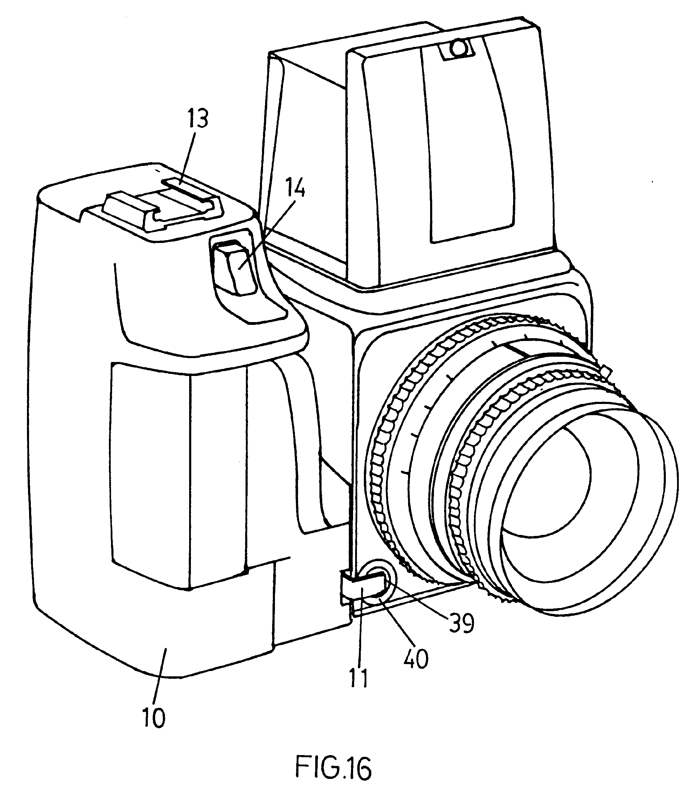

The winder's electromagnetic control release button 14 in the concave groove 19 (Fig.1) of a natural finger rest and guard to prevent inadvertent release, activate a solenoid 60 to trigger the camera shutter button 12 during exposure via the adjustable/interchangeable "L" arm 11 of the winder in the direction of the arrow 30 of Figure 2 and 5. The adjustability of the "L" is of valuable and practical importance as illustrated in Figures 9-10, in a new position with an optional modified shutter release button with components 38,39,40 which when assembled is quite flush with the camera body as illustrated in Figures 9 and 16 where the maximum protrusion (of the modified shutter release) is about 3mm as contrasting with the 11mm protrusion of the standard shutter relase button 12 of Figures 2 and 5 which would quite inconvenience the free flow of turning the focusing ring 16 of the lens 15 close to the camera body by the left hand fingers used in conjunction with the right hand hold winder.

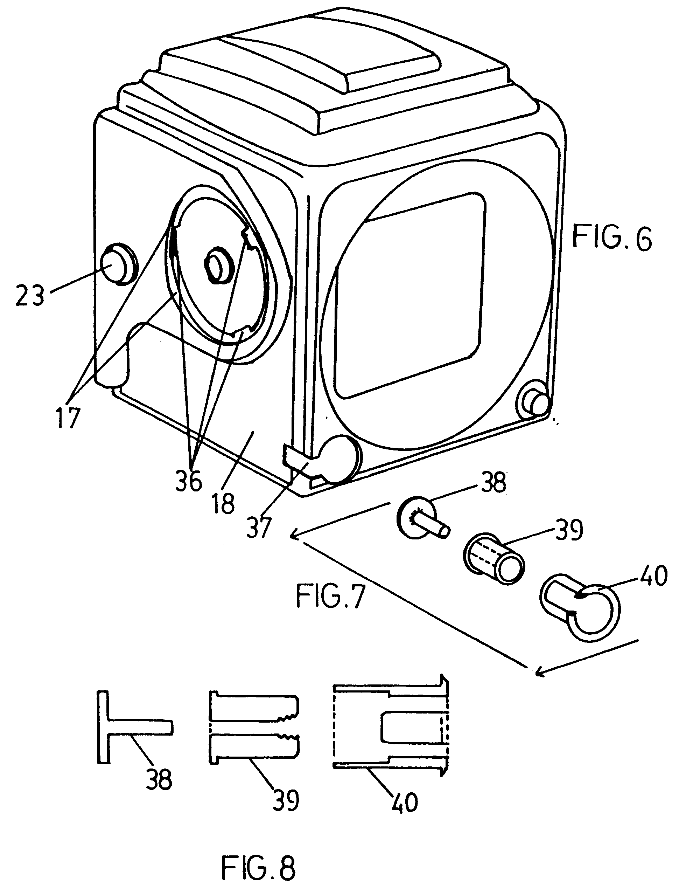

The position of the adjustable/interchangeable triggering "L" arm 11 side-mounted on the winder as shown in Figure 1 greatly helps in the overall concept of the I-shaped winder, particularly the method of easy mounting, locking, use, good ergonomics and handling and positive balance in hold, and especially in conjunction with the preferred said optional modified shutter release in Figures 6-10 In true effect it permits smooth focusing action of the lenses with the left hand fingers while the stronger right hand hold the winder's entire weight therefore, not contributing any further undesirable moments to the camera centre of gravity (C.G.). The snug-fit contoured right thumb rest 45 provide excellent balance against the moments of the camera set.

It is an advantage of the invention of the winder with the preferred winder configuration and modification of the camera shutter release just described, that focus adjusting of the focusing ring 16 of lens 15 close to the camera body would be very smooth, relatively free of obstruction like in the case of the standard shutter release.

The preferred and improved feature of the modified shutter release button necessitate a modification on the camera body 18 at 37, which involves a procedure of dismantling the outer body shell from the inner mirror-box. (To be carried out by camera repairman or the camera owner with the help of drawings and description). The standard shutter button 12 is removed and in its place the hole is made bigger and sufficiently fit for the modified shutter release button component 40. The hole and the right angle slot 37 of about 5.5mm-6.5mm wide x 6mm deep is filed out or cut with a file to allow the required triggering travel depth and width of the adjustable "L" arm 11. Similarly a cut-through slot in the shutter button component 40 should be aligned correctly to the slot 37 on the camera body and glued with epoxy adhesive or similar alternatives, as shown in Figures 6-7. The other components 38 and 39 are then to be assembled as shown in Figure 9 , completed by reassembling the body shell and mirror-box. The shutter components 39 and 38 which are mobile inside the component 40 would transfer the trigger action when activated, to trigger the levers 41 and 42 of the mirror box that start the exposure cycle. The required triggered distance moved is about 3½mm and is quite shallow of about 1½mm for the left index finger to manually depress beyond the component 40 which is the shutter guard ring of a diameter of 11-12mm after the initial protrusion of 2mm. Alternatively an add-on extension button to protrude further outward is provided by screwing onto component 39. However, no change is necessary for the winder with the adjustable "L" arm 11. Adjustability of the "L" arm 11 is achieved by the use of 2 screws 20 or similar means to lock the change of its position in relation to the solenoid activated "L" arm 43. A slot is provided in the "L" arm, the screws can be tightened at any position along this slot.

Alternatively can have different sizes of "L" arm which can be interchanged.

Another solenoid activated adjustable mechanical trigger "L" arm 47 is used to set the camera pre-release lever 22 (Fig.14), the functions are opening the auxiliary shutter, stop down aperture, close the lens shutter. Operation of the pre-release button is indicated by the direction of the arrow 46 by the "L" arm 47 triggered by solenoid (not shown). The method of adjustability of the shutter trigger "L" arm 11 is applied here for the "L" arm 47 which would be adjusted for the slightly longer pre-release button 22a of the newer cameras shown in Figure 15.

With the two mechanical "L" arms 11 and 47 for triggering the camera shutter release button 12 and the pre-release lever 22 respectively and these "L" arms themselves being triggered by two corresponding "L" arms activated by solenoids, it is possible to have a means of circuitry or arrangement of circuitry to operate the camera shutter button and the pre-release lever in a number of interesting and useful combinations in shutter release function modes, e.g
A normal release for single exposure
B pre-release first, followed by shutter release OFF/ON feature
C Automatic pre-release activated after the normal film advance, shutter tensioning cycle.
D for continuous exposure,

Such electronic circuitry to be housed in the winder and performs these functions (controlled by selecter dial SD) can be designed by a person skilled in the art.

Alternatively to the solenoid actuable arrangement of L arms disclosed herein a purely mechanical arrangement could be used to actuate the L arms.

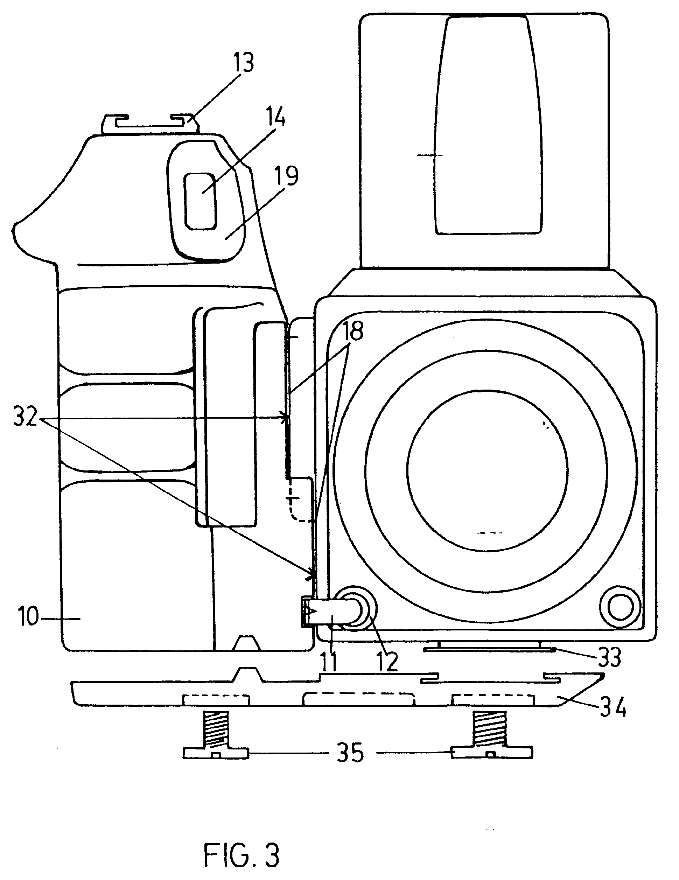

At the top of the winder, an accessory shoe 13 is provided to hold flash attachements etc., and additional or optional extra sturdy mounting is provided by lightweight, thin, strong base plate 34 (Fig.3) to the base of winder and camera's tripod plate 33 with recessed screws 35 or other quick release/lock means.

Such a base plate could be provided already attached to the winder by a hinge. The winder would be initially attached to the camera as described above, then the base plate would be swung on its hinge to a position where it can be attached to the camera tripod hole, as described above in relation to base plate 34.

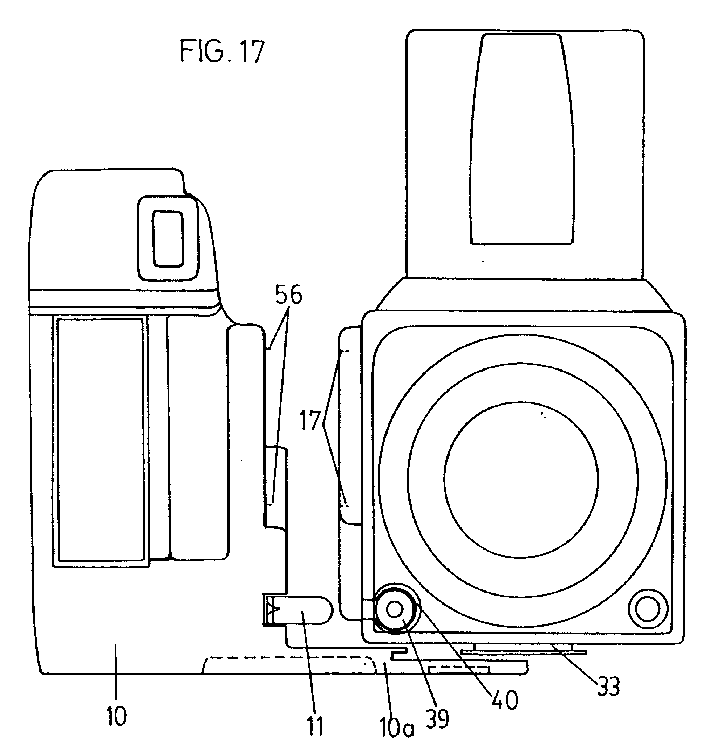

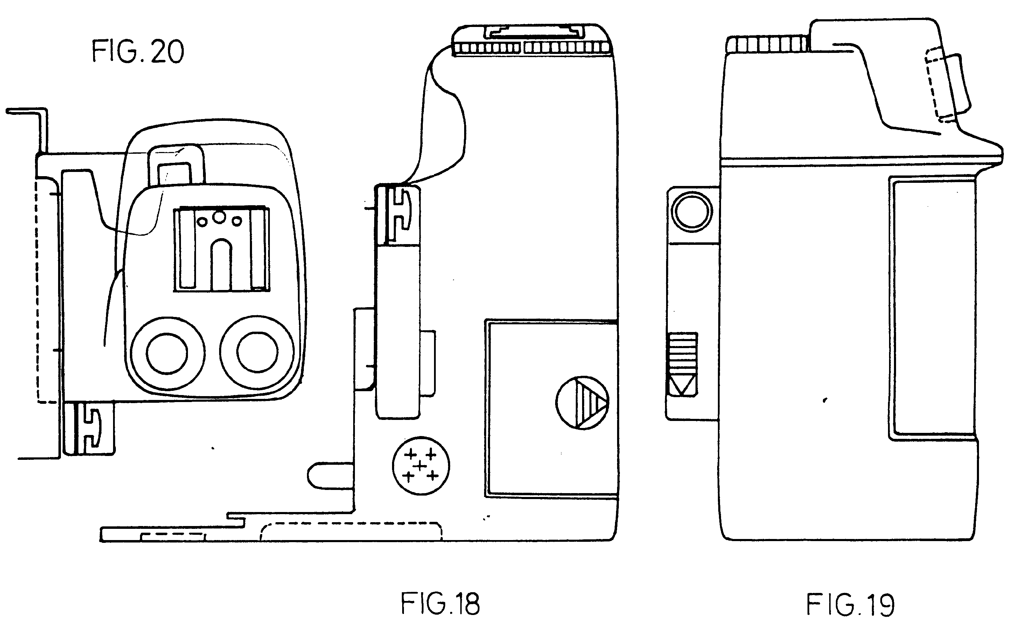

Figures 17 to 20 illustrate an arrangement where the winder 10 has a thin integral base plate 10a.

The same concept as described in the above embodiment can be adapted to other similar medium format cameras with various configuration of gearing and adaptors most appropriate to the camera design with the winder e.g worm and wheel gear arrangement.

## Claims

1. An electronic motor winder for use with a camera, the camera having a manually-operable winding mechanism (36) provided on a first surface thereof and a shutter release mechanism (12), comprising:
a generally rectangular body (10) adapted to be detachably mounted on the camera;
a drive assembly (21,24,25,25a,26) contained in the body (10) and including an electric motor (21), for enabling the winding of film; said drive assembly being adapted to be coupled to the camera winding mechanism;
a mechanically or electromechanically operable actuator (11) arranged to operate the camera manual shutter release mechanism (12);
a manually operable control button (14) for operating the drive assembly (21,24,25,25a,26) and the actuator (11);
a battery compartment for receiving batteries to energise the motor;
electronic circuitry for controlling the operation of the winder in response to operation of the control button; wherein the winder is adapted for use with a medium format generally cuboid camera;
characterised in that an attachment surface (57) of the body (10) is adapted to be mounted directly to said first surface of the camera such that said attachment surface is adjacent to and opposes a substantial portion of said first surface of the camera; and
in that the attachment surface (57) is provided with interengagement means (44,44a,50) arranged to interengage the interengagement means on the first surface of the camera, whereby the camera is stably supported by, and in relation to, the winder when said winder is in use.

2. A winder in accordance with claim 1, wherein said drive assembly further comprises reduction gearing (25, 25a) and an adapter (26), the adaptor being arranged to lockably engage with the camera winding mechanism (36) in order to enable film to be wound on.

3. A winder in accordance with claim 2, wherein the adaptor (26) is connected to a gear (24) which is arranged to rotate when driven by the reduction gearing (25, 25a) to drive the camera winding mechanism (36) via the adaptor (26)), the gear (24)) being mounted with respect to a shaft (28) but spaced therefrom by means of ball bearings (BB), thereby reducing film winding load friction as the gear (24) rotates.

4. A winder in accordance with claim 2 or 3, wherein the electric motor (21) has a pinion which drives a first gear (25a) having a first pinion, the first pinion driving a second gear (25), having a second pinion which drives a gear (24) which drives the camera winding mechanism (36) via the lockable adaptor (26).

5. A winder in accordance with any preceding claim, wherein the attachment surface is defined by an attachment plate (57) having a projection (56) arranged to fit into the camera body opening (17) for the camera winding gear train, to thereby align the drive assembly (21,25,25a,24,26) with the camera winding mechanism (36) and provide further support for the winder with respect to the camera.

6. A winder in accordance with claim 5 wherein the interengagement means provided on the attachment plate (57) of the winder body comprises a keyhole aperture (44), the keyhole aperture being arranged to receive therein a lug (23) which projects from the camera surface, the keyhole aperture being shaped to receive the lug through the circular part thereof, the body (10) being rotatable through an angle relative to the camera to cause lug (23) to slide into the elongate part of the keyhole aperture, in order to firmly lock the winder body to the camera.

7. A winder in accordance with claim 6, wherein there is provided a switch on the winder body operable to move a lever to a position where the lever engages said drive assembly (21, 24, 25, 25a) to prevent motion thereof, so that the winder may be detached from the camera.

8. A winder in accordance with any preceding claim wherein the actuator (11) is an "L" shaped arm which extends from the body (10) and is arranged to operate the manual shutter release mechanism (12) of the camera on operation of a solenoid (60) provided in the body.

9. A winder in accordance with claim 8, wherein the "L" shaped arm (11) is adjustable in length for different projecting distances of the camera shutter release mechanism (12).

10. A winder in accordance with claim 8, wherein the "L" shaped arm (11) is detachable from the body (10), to allow replacement by "L" shaped arm of different lengths to allow for different projecting distances of the camera shutter release mechanism (12).

11. A winder in accordance with any of claim 8 to 10 wherein the "L" shaped arm (11) is mounted on said attachment surface of the body (10) so as to be, in use, flush with said first surface of the camera.

12. A winder in accordance with any preceding claim wherein the body (10) is provided with a further electro-mechanically operable actuator (47) arranged to operate a pre-release mechanism (22,22a) of the camera, the further actuator being operable in response to operation of the manual control button (14).

13. A winder in accordance with any preceding claim wherein said body (10) has a rectangular generally "I" shaped configuration and is anatomically shaped (45) to fit the shape of the hand, to thereby facilitate gripping thereof by an operator.

14. A winder in accordance with any preceding claim, wherein said body (10) is provided with a flash unit mounting (13) on the upper surface thereof.

15. A winder in accordance with any preceding claim, wherein the body further includes a substantially flat base plate (34) attached thereto by a hinge, the base plate being movable on the hinge to a position in which planes of the base plate and of the base surface of the camera are immediately adjacent and substantially parallel, the arrangement including means (33,35) for attaching said base plate to said base surface to provide further support for said winder mounting.

16. A winder in accordance with any of claims 1 to 14, wherein there is provided a base plate (10a) integral with and extending from the winder body (10), the base plate being arranged to be attached flush with the camera base, to thereby provide further support for the camera mounting.

17. A winder in accordance with any preceding claim, for use with a Hasselblad (registered trade mark) 500c model or 500c/m model camera.

18. A camera and winder assembly comprising a winder in accordance with any of claims 8 to 17, and wherein the shutter release mechanism of the camera (38,39,40) comprise a release button (12) arranged such that the top of the release button protrudes in the order of 3mm from the front surface of the camera, and a slot is cut in said first surface of the camera, to allow for movement of the "L" shaped arm (11) to actuate the shutter release button (12), whereby the shutter release button in positioned to allow easier manual focusing any lens (15) attached to the camera.

## Patentansprüche

1. Elektronische Motor-Filmtransporteinrichtung zum Einsatz in einer Kamera, wobei die Kamera einen manuell zu betätigenden Filmtransportmechanismus (36) aufweist, der sich an einer ersten Fläche derselben befindet, sowie einen Verschlußauslösemechanismus (12), die umfaßt:
ein im allgemeinen rechteckiges Gehäuse (10), das lösbar an der Kamera angebracht wird;
eine Antriebsbaugruppe (21,24,25,25a,26), die in dem Gehäuse (10) enthalten ist und einen Elektromotor (21) enthält, der den Transport des Films ermöglicht; wobei die Antriebsvorrichtung mit dem Filmtransportmechanismus der Kamera verbunden wird;
ein mechanisch oder elektromechanisch zu betätigendes Betätigungselement (11), das den manuellen Verschlußauslösemechanismus der Kamera (12) betätigt;
einen manuell zu betätigenden Bedienungsknopf (14) zur Betätigung der Antriebsbaugruppe (21,24,25,25a,26) und des Betätigungselementes (11);
ein Batteriefach zur Aufnahme von Batterien, die den Motor speisen;
eine elektronische Schaltung zur Steuerung der Funktion der Filmtransporteinrichtung in Reaktion auf die Betätigung des Bedienungsknopfes; wobei die Filmtransporteinrichtung zum Einsatz mit einer im allgemeinen quaderförmigen Mittelformatkamera geeignet ist;
**dadurch gekennzeichnet**, daß eine Anbringungsfläche (57) des Gehäuses (10) direkt an der ersten Fläche der Kamera so angebracht wird, daß die Anbringungsfläche an einen erheblichen Abschnitt der ersten Fläche der Kamera angrenzt und ihm gegenüberliegt; und
dadurch, daß die Anbringungsfläche (57) mit Eingriffseinrichtungen (44,44a,50) versehen ist, die mit den Eingriffseinrichtungen an der ersten Fläche der Kamera in Eingriff kommen, wodurch die Kamera stabil von der Filmtransporteinrichtung und in bezug auf sie gehalten wird, wenn die Filmtransporteinrichtung in Funktion ist.

2. Filmtransporteinrichtung nach Anspruch 1, wobei die Antriebsbaugruppe des weiteren ein Untersetzungsgetriebe (25,25a) sowie ein Zwischenstück (26) umfaßt, wobei das Zwischenstück verriegelbar mit dem Transportmechanismus (36) der Kamera in Eingriff gebracht wird, um das Aufwickeln von Film zu ermöglichen.

3. Filmtransporteinrichtung nach Anspruch 2, wobei das Zwischenstück (26) mit einem Zahnrad (24) verbunden ist, das sich dreht, wenn es durch das Untersetzungsgetriebe (25,25a) angetrieben wird, und so den Filmtransportmechanismus (36) der Kamera über das Zwischenstück (26) antreibt, wobei das Zahnrad (24) auf einer Welle (28) angebracht, jedoch mittels Kugellager (BB) von selbiger beabstandet ist, wodurch die Filmtransport-Lastreibung verringert wird, wenn sich das Zahnrad (24) dreht.

4. Filmtransporteinrichtung nach Anspruch 2 oder 3, wobei der Elektromotor (21) ein Ritzel aufweist, das ein erstes Zahnrad (25a) mit einem ersten Ritzel antreibt, wobei das erste Ritzel ein zweites Zahnrad (25) mit einem zweiten Ritzel antreibt, das ein Zahnrad (24) antreibt, das den Filmtransportmechanismus (36) der Kamera über das verriegelbare Zwischenstück (26) antreibt.

5. Filmtransporteinrichtung nach einem der vorangehenden Ansprüche, wobei die Anbringungsfläche durch eine Anbringungsplatte (57) mit einem Vorsprung (56) gebildet wird, der in die Kameragehäuseöffnung (17) für den Filmtransport-Räderzug der Kamera paßt, wodurch die Antriebsbaugruppe (21,25,25a,24,26) auf den Filmtransportmechanismus (36) der Kamera ausgerichtet und weiterer Halt für die Filmtransporteinrichtung in bezug auf die Kamera gewährleistet wird.

6. Filmtransporteinrichtung nach Anspruch 5, wobei die Eingriffseinrichtung, die an der Anbringungsplatte (57) des Gehäuses der Filmtransporteinrichtung vorhanden ist, eine Schlüssellochöffnung (44) umfaßt, wobei die Schlüssellochöffnung einen Ansatz (23) aufnimmt, der von der Kamerafläche vorsteht, wobei die Schlüssellochöffnung so geformt ist, daß sie den Ansatz durch den runden Teil derselben aufnimmt, wobei das Gehäuse (10) über einen Winkel in bezug auf die Kamera drehbar ist, wodurch der Ansatz (23) in den länglichen Teil der Schlüssellochöffnung hineingleitet, um so das Gehäuse der Filmtransporteinrichtung fest an der Kamera zu arretieren.

7. Filmtransporteinrichtung nach Anspruch 6, wobei ein Schalter an dem Gehäuse der Filmtransporteinrichtung vorhanden ist, durch dessen Betätigung ein Hebel in eine Stellung bewegt wird, in der der Hebel mit der Antriebsbaugruppe (21,24,25,25a) in Kontakt ist und so Bewegung derselben verhindert, so daß die Filmtransporteinrichtung von der Kamera gelöst werden kann.

8. Filmtransporteinrichtung nach einem der vorangehenden Ansprüche, wobei das Betätigungselement (11) ein "L"-förmiger Arm ist, der sich von dem Gehäuse (10) erstreckt und den manuellen Verschlußauslösemechanismus (12) der Kamera bei Betätigung eines Elektromagneten (60) betätigt, der sich in dem Gehäuse befindet.

9. Filmtransporteinrichtung nach Anspruch 8, wobei der "L"-förmige Arm (11) für verschiedene Vorstehlängen des Verschlußauslösemechanismus (12) der Kamera längenverstellbar ist.

10. Filmtransporteinrichtung nach Anspruch 8, wobei der "L"-förmige Arm (11) von dem Gehäuse (10) gelöst werden kann, um das Auswechseln gegen einen "L"-förmigen Arm verschiedener Längen zu ermöglichen, so daß unterschiedliche Vorstehlängen des Verschlußauslösemechanismus (12) der Kamera möglich sind.

11. Filmtransporteinrichtung nach einem der Ansprüche 8 bis 10, wobei der "L"-förmige Arm (11) so an der Anbringungsfläche des Gehäuses (10) angebracht ist, daß er in Funktion mit der ersten Fläche der Kamera bündig ist.

12. Filmtransporteinrichtung nach einem der vorangehenden Ansprüche, wobei das Gehäuse (10) mit einem weiteren elektromechanisch zu betätigenden Betätigungselement (47) versehen ist, das einen Vorauslösemechanismus (22,22a) der Kamera betätigt, wobei das weitere Betätigungselement in Reaktion auf Betätigung des manuellen Bedienungsknopfes (14) zu betätigen ist.

13. Filmtransporteinrichtung nach einem der vorangehenden Ansprüche, wobei das Gehäuse (10) einen rechteckigen, im allgemeinen "I"-förmigen Aufbau hat und anatomisch geformt ist (45), so daß es sich der Form der Hand anpaßt, wodurch das Ergreifen desselben durch einen Bedienenden erleichtert wird.

14. Filmtransporteinrichtung nach einem der vorangehenden Ansprüche, wobei das Gehäuse (10) mit einer Blitzeinheit-Halterung (13) an der Oberseite desselben versehen ist.

15. Filmtransporteinrichtung nach einem der vorangehenden Ansprüche, wobei das Gehäuse (10) des weiteren eine im wesentlichen flache Grundplatte (34) enthält, die über ein Gelenk daran angebracht ist, wobei die Grundplatte an dem Gelenk in eine Stellung bewegt werden kann, in der die Ebenen der Grundplatte und der Unterseite der Kamera unmittelbar aneinandergrenzen und im wesentlichen parallel sind, wobei die Anordnung Einrichtungen (33,35) zum Anbringen der Grundplatte an der Unterseite enthält, um weiteren Halt für die Anbringung der Filmtransporteinrichtung zu gewährleisten.

16. Filmtransporteinrichtung nach einem der Ansprüche 1 bis 14, wobei eine Grundplatte (10a) vorhanden ist, die mit dem Gehäuse (10) der Filmtransporteinrichtung eine Einheit bildet und sich von selbigem erstreckt, wobei die Grundplatte mit der Kameraunterseite bündig angebracht wird, um weiteren Halt für die Kameraanbringung zu gewährleisten.

17. Filmtransporteinrichtung nach einem der vorangehenden Ansprüche zum Einsatz mit einer Hasselblad®-Kamera, Modell 500c oder Modell 500c/m.

18. Kamera-und-Filmtransporteinrichtungs-Baugruppe, die eine Filmtransporteinrichtung nach einem der Ansprüche 8 bis 17 umfaßt, und wobei der Verschlußauslösemechanismus der Kamera (38,39,40) einen Auslöseknopf (12) umfaßt, der so angeordnet ist, daß die Oberseite des Auslöseknopfes in der Größenordnung von 3 mm von der Vorderseite der Kamera vorsteht, und ein Schlitz in die erste Fläche der Kamera geschnitten ist, um die Bewegung des "L"-förmigen Armes (11) zur Betätigung des Verschlußauslöseknopfes (12) zu ermöglichen, wobei der Verschlußauslöseknopf so angeordnet ist, daß er leichtere manuelle Scharfeinstellung eines beliebigen Objektivs (15) ermöglicht, das an der Kamera angebracht ist.

## Revendications

1. Enrouleur électronique à moteur destiné à être utilisé avec un appareil de prise de vues, l'appareil de prise de vues ayant un mécanisme manuel d'enroulement (36) placé sur une première surface et un mécanisme (12) de libération d'obturateur, comprenant :
un corps (10) de forme générale rectangulaire, destiné à être monté de façon amovible sur l'appareil de prise de vues,
un ensemble d'entraînement (21, 24, 25, 25a, 26) contenu dans le corps (10) et comprenant un moteur électrique (21) destiné à permettre l'enroulement du film, l'ensemble d'entraînement étant destiné à être couplé au mécanisme d'enroulement de l'appareil de prise de vues,
un organe de manoeuvre (11) qui peut être commandé mécaniquement ou électromécaniquement et qui est destiné à manoeuvrer le mécanisme (12) de libération d'obturateur manuel de l'appareil de prise de vues,
un bouton manuel (14) de commande de l'ensemble d'entraînement (21, 24, 25, 25a, 26) et de l'organe de manoeuvre (11),
un compartiment destiné à loger des batteries d'alimentation du moteur,
un circuit électronique de commande du fonctionnement de l'enrouleur d'après la manoeuvre du bouton de commande, l'enrouleur étant destiné à être utilisé avec un appareil de prise de vues en forme de cuboïde de façon générale, de format moyen,
caractérisé en ce qu'une surface de fixation (57) du corps (10) est destinée à être montée directement sur la première surface de l'appareil de prise de vues afin que la surface de fixation soit adjacente à la première surface et placée en face d'une partie importante de cette première surface de l'appareil de prise de vues, et
en ce que la surface de fixation (57) comporte un dispositif de coopération (44, 44a, 50) destiné à coopérer avec le dispositif de coopération de la première surface de l'appareil de prise de vues, si bien que l'appareil de prise de vues est supporté de manière stable par l'enrouleur et par rapport à celui-ci lorsque l'enrouleur est utilisé.

2. Enrouleur selon la revendication 1, dans lequel l'ensemble d'entraînement comporte en outre un mécanisme réducteur (25, 25a) et un adaptateur (26), l'adaptateur étant destiné à coopérer par verrouillage avec le mécanisme (36) d'enroulement de l'appareil de prise de vues afin que le film puisse être enroulé sur lui.

3. Enrouleur selon la revendication 2, dans lequel l'adaptateur (26) est raccordé à un pignon (24) qui est destiné à tourner lorsqu'il est entraîné par le mécanisme réducteur (25, 25a) afin qu'il entraîne le mécanisme (36) d'enroulement de l'appareil de prise de vues par l'intermédiaire de l'adaptateur (26), le pignon (24) étant monté sur un arbre (28), mais à distance de celui-ci, par des roulements à billes (BB), si bien que le frottement dû à la charge d'enroulement du film est réduit lorsque le pignon (24) tourne.

4. Enrouleur selon la revendication 2 ou 3, dans lequel le moteur électrique (21) a un petit pignon qui entraîne un premier pignon (25a) ayant un premier petit pignon, le premier petit pignon entraînant un second pignon (25) qui a un second petit pignon qui entraîne un pignon (24) qui entraîne lui-même le mécanisme (36) d'enroulement de l'appareil de prise de vues par l'intermédiaire de l'adaptateur verrouillable (26).

5. Enrouleur selon l'une quelconque des revendications précédentes, dans lequel la surface de fixation est délimitée par une plaque de fixation (57) ayant une saillie (56) destinée à se loger dans l'ouverture (17) du corps de l'appareil de prise de vues destinée au train d'engrenages d'enroulement de l'appareil de prise de vues, afin que l'ensemble d'entraînement (21, 25, 25a, 24, 26) soit aligné sur le mécanisme (36) d'enroulement de l'appareil de prise de vues et forme un support supplémentaire pour l'enrouleur par rapport à l'appareil de prise de vues.

6. Enrouleur selon la revendication 5, dans lequel le dispositif de coopération placé sur la plaque de fixation (57) du corps de l'enrouleur comprend une ouverture (44) en forme de trou de serrure, cette ouverture en forme de trou de serrure étant destinée à loger une patte (23) qui dépasse de la surface de l'appareil de prise de vues, l'ouverture en forme de trou de serrure ayant une configuration permettant le logement de la patte dans sa partie circulaire, le corps (10) pouvant tourner d'un certain angle par rapport à l'appareil de prise de vues de manière que la patte (23) coulisse dans la partie allongée de l'ouverture en forme de trou de serrure et bloque fermement le corps de l'enrouleur sur l'appareil de prise de vues.

7. Enrouleur selon la revendication 6, dans lequel un interrupteur est placé sur le corps de l'enrouleur et peut être manoeuvré afin qu'il déplace un levier vers une position dans laquelle le levier est au contact de l'ensemble d'entraînement (21, 24, 25, 25a) et empêche le mouvement de celui-ci, si bien que l'enrouleur peut être séparé de l'appareil de prise de vues.

8. Enrouleur selon l'une quelconque des revendications précédentes, dans lequel l'organe de manoeuvre (11) est un bras en L dépassant du corps (10) et est destiné à manoeuvrer le mécanisme (12) de libération d'obturateur manuel de l'appareil de prise de vues lors de la manoeuvre d'un électro-aimant (60) placé dans le corps.

9. Enrouleur selon la revendication 8, dans lequel le bras en L (11) a une longueur réglable pour différentes distances de saillie du mécanisme (12) de libération de l'obturateur de l'appareil de prise de vues.

10. Enrouleur selon la revendication 8, dans lequel le bras en L (11) peut être séparé du corps (10) afin qu'il puisse être remplacé par un bras en L de longueur différente, permettant ainsi l'obtention de différentes distances de saillies du mécanisme (12) de libération d'obturateur de l'appareil de prise de vues.

11. Enrouleur selon l'une quelconque des revendications 8 à 10, dans lequel le bras en L (11) est monté sur la surface de fixation du corps (10) afin que, pendant l'utilisation, il se trouve au niveau de la première surface de l'appareil de prise de vues.

12. Enrouleur selon l'une quelconque des revendications précédentes, dans lequel le corps (10) a un organe de manoeuvre supplémentaire (47) commandé électromécaniquement et destiné à manoeuvrer un mécanisme (22, 22a) de libération préalable de l'appareil de prise de vues, l'organe de manoeuvre supplémentaire pouvant être commandé à la suite de la manoeuvre du bouton manuel de commande (14).

13. Enrouleur selon l'une quelconque des revendications précédentes, dans lequel le corps (10) a une configuration en I de forme générale rectangulaire et a une forme (45) adaptée à la forme de la main afin que sa saisie par un opérateur soit facile.

14. Enrouleur selon l'une quelconque des revendications précédentes, dans lequel le corps (10) comporte un organe (13) de montage d'ensemble à lampe à éclairs à sa surface supérieure.

15. Enrouleur selon l'une quelconque des revendications prégådentes, dans lequel le corps comprend en outre une plaque de base (34) qui est pratiquement plate, qui lui est fixée par une articulation, la plaque de base étant mobile sur l'articulation vers une position dans laquelle les plans de la plaque de base et la surface de base de l'appareil de prise de vues sont immédiatement adjacents et pratiquement parallèles, l'ensemble comprenant un dispositif (33, 35) de fixation de la plaque de base à la surface de base afin que l'organe de montage de l'enrouleur soit supporté de façon supplémentaire.

16. Enrouleur selon l'une quelconque des revendications 1 à 14, dans lequel une plaque de base (10a) est solidaire du corps (10) de l'enrouleur et dépasse de celui-ci, la plaque de base étant destinée à être fixée au niveau de la base de l'appareil de prise de vues afin qu'elle forme un support supplémentaire pour l'organe de montage de l'appareil de prise de vues.

17. Enrouleur selon l'une quelconque des revendications précédentes, destiné à être utilisé avec un appareil de prise de vues modèle 500c ou 500c/m "Hasselblad" (marque de fabrique enregistrée).

18. Ensemble à appareil de prise de vues et enrouleur comprenant un enrouleur selon l'une quelconque des revendications 8 à 17, et dans lequel le mécanisme de libération d'obturateur de l'appareil de prise de vues (38, 39, 40) comprend un bouton (12) de libération disposé de manière que la partie supérieure de bouton de libération dépasse d'une distance de l'ordre de 3 mm de la surface avant de l'appareil de prise de vues, et une fente découpée dans la première surface de l'appareil de prise de vues afin qu'elle permette un déplacement du bras en L (11) pendant lequel celui-ci manoeuvre le bouton (12) de libération d'obturateur, si bien que le bouton de libération d'obturateur a une position permettant un réglage manuel plus facile d'un objectif quelconque (15) fixé à l'appareil de prise de vues.
